(19) Europäisches Patentamt / European Patent Office / Office européen des brevets

(11) **EP 4 531 290 B1**

(12) **EUROPEAN PATENT SPECIFICATION**

(45) Date of publication and mention
of the grant of the patent:
**17.06.2026 Bulletin 2026/25**

(51) International Patent Classification (IPC):
**H04B 1/00** *(2006.01)*     **H04B 1/10** *(2006.01)*

(52) Cooperative Patent Classification (CPC):
**H04B 1/0007; H04B 1/109**

(21) Application number: **24199507.5**

(22) Date of filing: **10.09.2024**

(54) **SAMPLED-DATA RECEIVER WITH CHOPPER STABILIZATION**

EMPFÄNGER FÜR ABGETASTETE DATEN MIT CHOPPERSTABILISIERUNG

RÉCEPTEUR DE DONNÉES ÉCHANTILLONNÉES AVEC STABILISATION DE HACHEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.09.2023 US 202318373057**
**26.09.2023 US 202318373093**

(43) Date of publication of application:
**02.04.2025 Bulletin 2025/14**

(73) Proprietor: **Apple Inc.**
**Cupertino, CA 95014 (US)**

(72) Inventors:
• **KONG, Long**
**Cupertino, CA, 95014 (US)**
• **GAMBINI, Simone**
**Cupertino, CA, 95014 (US)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**EP-A1- 3 193 446**     **CN-A- 113 552 400**
**US-B1- 6 191 648**

## Description

### BACKGROUND

The present disclosure relates generally to wireless communication, and more specifically to signal modulation and frequency down-conversion in transmitters and receivers in wireless communication devices.

A wireless communication device includes a radio frequency frontend (RFFE) circuit that may perform operations such as signal amplification and frequency down-conversion. The wireless communication device may also include a baseband chain that may further amplify a desired signal while rejecting unwanted signals, known as jammers or blocker signals. The baseband chain has evolved from continuous-time circuits to discrete-time circuits that process sampled data to provide benefits such as reduced power consumption, increased linearity and technology scaling. The baseband chain may include a chopper circuitry. A chopper may include a device or technique used to modulate (e.g., switch) a radio frequency signal on and off at a particular frequency. This process may be known as chopping or amplitude modulation.

Challenges for RFFE circuitry (e.g., a baseband chain) may include flicker noise and voltage offset from buffers or amplifiers inserted between sampling circuits, which may limit performance of narrowband applications-especially in direct-conversion scenarios. In some cases, chopper stabilization may be employed to overcome the flicker noise and voltage offset, but may result in additional noise due to chopper sampling operations.

The prior art document EP 3 193 446 A1 discloses a semiconductor circuit comprising an input block having a first chopper providing a chopped voltage signal, a first transconductance converting said chopped voltage signal into a chopped current signal, a second chopper providing a demodulated current signal, a current integrator having an integrating capacitor providing a continuous-time signal, a first feedback path comprising: a sample-and-hold block and a first feedback block, the first feedback path providing a proportional feedback signal upstream of the current integrator.

The prior art document US 6, 191,648 B1 discloses a switched-capacitor cosine filter circuit including a differential amplifier and a switched-capacitor circuit.

The prior art document CN 113552400 A discloses a current sensing circuitry that comprises a differential amplifier comprising first and second inputs configured to sense a current across a sense resistance, and an output configured to output a current sense signal.

### SUMMARY

The present invention is defined in the independent claim. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

Various aspects of this disclosure may be better understood upon reading the following detailed description and upon reference to the drawings described below in which like numerals refer to like parts.

FIG. 1 is a block diagram of an electronic device, according to embodiments of the present disclosure;

FIG. 2 is a functional diagram of the electronic device of FIG. 1, according to embodiments of the present disclosure;

FIG. 3 is a schematic diagram of a transmitter of the electronic device of FIG. 1, according to embodiments of the present disclosure;

FIG. 4 is a schematic diagram of a receiver of the electronic device of FIG. 1, according to embodiments of the present disclosure;

FIG. 5 is a schematic diagram of receiver circuitry of FIG. 4 that reduces or eliminates the impact of alias components due to chopper circuits, according to embodiments of the present disclosure;

FIG. 6 is a schematic diagram illustrating a direct-conversion architecture of receiver circuitry of FIG. 4 that improves performance of direct-conversion circuits and enables selection of common-mode levels at each stage of the direct-conversion circuit, according to embodiments of the present disclosure;

FIG. 7 is a schematic diagram illustrating another direct-conversion architecture of receiver circuitry of FIG. 4 that improves performance of direct-conversion circuits and enables selection of common-mode levels at each stage of the direct-conversion circuit by placing alternating current (AC)-coupling circuitry between chopper circuits and at an output of the amplifiers, according to embodiments of the present disclosure; and

FIG. 8 is a schematic diagram illustrating another direct-conversion architecture of receiver circuitry of FIG. 4 that improves performance of direct-conversion circuits and enables selection of common-mode levels at each stage of the direct-conversion circuit by placing AC-coupling circuitry between chopper circuits and at both an input and an output of the amplifiers, according to embodiments of the present disclosure.

## DETAILED DESCRIPTION OF SPECIFIC EMBODIMENTS

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the terms "approximately," "near," "about," "close to," and/or "substantially" should be understood to mean including close to a target (e.g., design, value, amount), such as within a margin of any suitable or contemplatable error (e.g., within 0.1 % of a target, within 1% of a target, within 5% of a target, within 10% of a target, within 25% of a target, and so on). Moreover, it should be understood that any exact values, numbers, measurements, and so on, provided herein, are contemplated to include approximations (e.g., within a margin of suitable or contemplatable error) of the exact values, numbers, measurements, and so on. Additionally, the term "set" may include one or more. That is, a set may include a unitary set of one member, but the set may also include a set of multiple members.

A wireless communication device includes a radio frequency frontend (RFFE) circuit that may perform operations such as signal amplification and frequency down-conversion. The wireless communication device may also include a baseband chain that may further amplify a desired signal while rejecting unwanted signals, known as jammers or blocker signals. The baseband chain has evolved from continuous-time circuits to discrete-time circuits that process sampled data to provide benefits such as reduced power consumption, increased linearity and technology scaling. The baseband chain may include a include chopper circuitry. A chopper may include a device or technique used to modulate (e.g., switch) a radio frequency signal on and off at a particular frequency. This process may be known as chopping or amplitude modulation. Challenges for RFFE circuitry (e.g., a baseband chain) may include flicker noise and voltage offset from buffers or amplifiers inserted between sampling circuits, which may limit performance of narrowband applications-especially in direct-conversion scenarios. In some cases, chopper stabilization may be employed to overcome the flicker noise and voltage offset, but may result in additional noise due to chopper sampling operations. The additional noise may be aliased (e.g., down-converted) such that the additional noise may interfere with a desired signal. The noise that is down-converted into or near the desired signal may be referred to as an "alias component."

Embodiments herein provide various apparatuses and techniques to reduce flicker noise and voltage offset from the buffers and/or amplifiers while avoiding additional alias components in a sampled-data receiver with chopper stabilization. Additionally, a direct-conversion baseband chain may be improved by disposing alternating current (AC) coupling circuits between chopper circuits in the transmitter or receiver chain to enable selection of a distinct common-mode level at each stage of the direct-conversion chain, while reducing or eliminating signal loss at direct current (DC) frequencies.

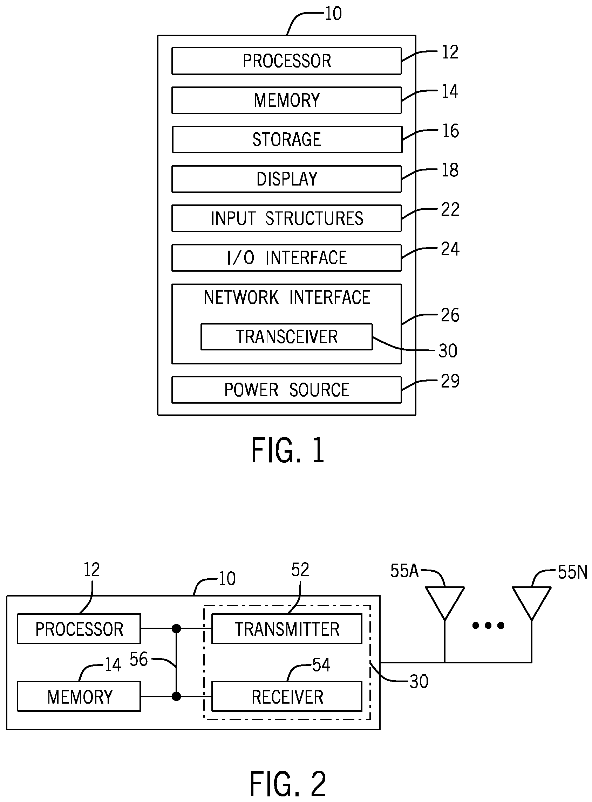

FIG. 1 is a block diagram of an electronic device 10, according to embodiments of the present disclosure. The electronic device 10 may include, among other things, one or more processors 12 (collectively referred to herein as a single processor for convenience, which may be implemented in any suitable form of processing circuitry), memory 14, nonvolatile storage 16, a display 18, input structures 22, an input/output (I/O) interface 24, a network interface 26, and a power source 29. The various functional blocks shown in FIG. 1 may include hardware elements (including circuitry), software elements (including machine-executable instructions) or a combination of both hardware and software elements (which may be referred to as logic). The processor 12, memory 14, the nonvolatile storage 16, the display 18, the input structures 22, the input/output (I/O) interface 24, the network interface 26, and/or the power source 29 may each be communicatively coupled directly or indirectly (e.g., through or via another component, a communication bus, a network) to one another to transmit and/or receive signals between one another. It should be noted that FIG. 1 is merely one example of a particular implementation and is intended to illustrate the types of components that may be present in the electronic device 10.

By way of example, the electronic device 10 may include any suitable computing device, including a desktop or notebook computer, a portable electronic or handheld electronic device such as a wireless electronic device or smartphone, a tablet, a wearable electronic device, and other similar devices. In additional or alternative embodiments, the electronic device 10 may include an access point, such as a base station, a router (e.g., a wireless or Wi-Fi router), a hub, a switch, and so on. It should be noted that the processor 12 and other related items in FIG. 1 may be embodied wholly or in part as software, hardware, or both. Furthermore, the processor 12 and other related items in FIG. 1 may be a single contained processing module or may be incorporated wholly or partially within any of the other elements within the electronic device 10. The processor 12 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that may perform calculations or other manipulations of information. The processors 12 may include one or more application processors, one or more baseband processors, or both, and perform the various functions described herein.

In the electronic device 10 of FIG. 1, the processor 12 may be operably coupled with a memory 14 and a nonvolatile storage 16 to perform various algorithms. Such programs or instructions executed by the processor 12 may be stored in any suitable article of manufacture that includes one or more tangible, computer-readable media. The tangible, computer-readable media may include the memory 14 and/or the nonvolatile storage 16, individually or collectively, to store the instructions or routines. The memory 14 and the nonvolatile storage 16 may include any suitable articles of manufacture for storing data and executable instructions, such as random-access memory, read-only memory, rewritable flash memory, hard drives, and optical discs. In addition, programs (e.g., an operating system) encoded on such a computer program product may also include instructions that may be executed by the processor 12 to enable the electronic device 10 to provide various functionalities.

In certain embodiments, the display 18 may facilitate users to view images generated on the electronic device 10. In some embodiments, the display 18 may include a touch screen, which may facilitate user interaction with a user interface of the electronic device 10. Furthermore, it should be appreciated that, in some embodiments, the display 18 may include one or more liquid crystal displays (LCDs), light-emitting diode (LED) displays, organic light-emitting diode (OLED) displays, active-matrix organic light-emitting diode (AMOLED) displays, or some combination of these and/or other display technologies.

The input structures 22 of the electronic device 10 may enable a user to interact with the electronic device 10 (e.g., pressing a button to increase or decrease a volume level). The I/O interface 24 may enable electronic device 10 to interface with various other electronic devices, as may the network interface 26. In some embodiments, the I/O interface 24 may include an I/O port for a hardwired connection for charging and/or content manipulation using a standard connector and protocol, such as the Lightning connector, a universal serial bus (USB), or other similar connector and protocol. The network interface 26 may include, for example, one or more interfaces for a personal area network (PAN), such as an ultra-wideband (UWB) or a BLUETOOTH® network, a local area network (LAN) or wireless local area network (WLAN), such as a network employing one of the IEEE 802.11x family of protocols (e.g., WI-FI®), and/or a wide area network (WAN), such as any standards related to the Third Generation Partnership Project (3GPP), includ-

ing, for example, a 3rd generation (3G) cellular network, universal mobile telecommunication system (UMTS), 4th generation (4G) cellular network, Long Term Evolution ® (LTE) cellular network, Long Term Evolution License Assisted Access (LTE-LAA) cellular network, 5th generation (5G) cellular network, and/or New Radio (NR) cellular network, a 6th generation (6G) or greater than 6G cellular network, a satellite network, a non-terrestrial network, and so on. In particular, the network interface 26 may include, for example, one or more interfaces for using a cellular communication standard of the 5G specifications that include the millimeter wave (mmWave) frequency range (e.g., 24.25-300 gigahertz (GHz)) that defines and/or enables frequency ranges used for wireless communication. The network interface 26 of the electronic device 10 may allow communication over the aforementioned networks (e.g., 5G, Wi-Fi, LTE-LAA, and so forth).

The network interface 26 may also include one or more interfaces for, for example, broadband fixed wireless access networks (e.g., WIMAX®), mobile broadband Wireless networks (mobile WIMAX®), asynchronous digital subscriber lines (e.g., ADSL, VDSL), digital video broadcasting-terrestrial (DVB-T®) network and its extension DVB Handheld (DVB-H®) network, ultra-wideband (UWB) network, alternating current (AC) power lines, and so forth.

As illustrated, the network interface 26 may include a transceiver 30. In some embodiments, all or portions of the transceiver 30 may be disposed within the processor 12. The transceiver 30 may support transmission and receipt of various wireless signals via one or more antennas, and thus may include a transmitter and a receiver. The power source 29 of the electronic device 10 may include any suitable source of power, such as a rechargeable lithium polymer (Li-poly) battery and/or an alternating current (AC) power converter.

FIG. 2 is a functional diagram of the electronic device 10 of FIG. 1, according to embodiments of the present disclosure. As illustrated, the processor 12, the memory 14, the transceiver 30, a transmitter 52, a receiver 54, and/or antennas 55 (illustrated as 55A-55N, collectively referred to as an antenna 55) may be communicatively coupled directly or indirectly (e.g., through or via another component, a communication bus, a network) to one another to transmit and/or receive signals between one another.

The electronic device 10 may include the transmitter 52 and/or the receiver 54 that respectively enable transmission and reception of signals between the electronic device 10 and an external device via, for example, a network (e.g., including base stations or access points) or a direct connection. As illustrated, the transmitter 52 and the receiver 54 may be combined into the transceiver 30. The electronic device 10 may also have one or more antennas 55A-55N electrically coupled to the transceiver 30. The antennas 55A-55N may be configured in an omnidirectional or directional configuration, in a single-beam, dual-beam, or multi-beam arrangement, and so on. Each antenna 55 may be associated with one or more beams and various configurations. In some embodiments, multiple antennas of the antennas 55A-55N of an antenna group or module may be communicatively coupled to a respective transceiver 30 and each emit radio frequency signals that may constructively and/or destructively combine to form a beam. The electronic device 10 may include multiple transmitters, multiple receivers, multiple transceivers, and/or multiple antennas as suitable for various communication standards. In some embodiments, the transmitter 52 and the receiver 54 may transmit and receive information via other wired or wireline systems or means.

As illustrated, the various components of the electronic device 10 may be coupled together by a bus system 56. The bus system 56 may include a data bus, for example, as well as a power bus, a control signal bus, and a status signal bus, in addition to the data bus. The components of the electronic device 10 may be coupled together or accept or provide inputs to each other using some other mechanism.

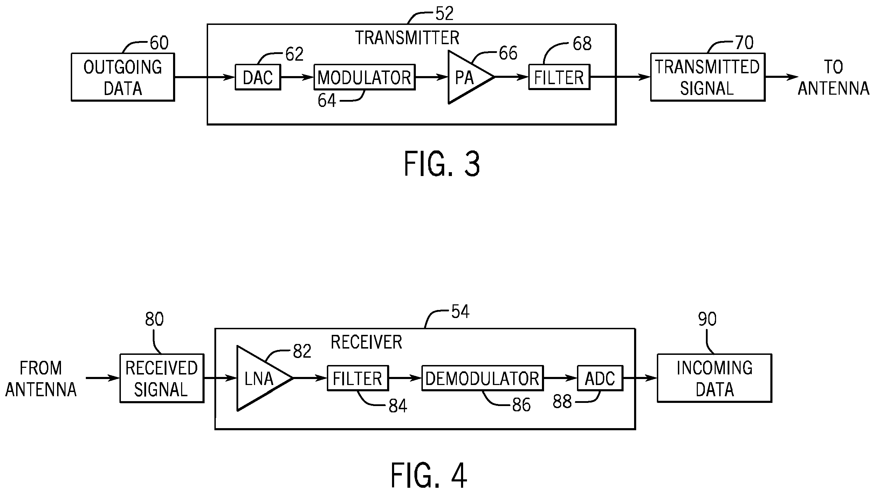

FIG. 3 is a schematic diagram of the transmitter 52 (e.g., transmit circuitry), according to embodiments of the present disclosure. As illustrated, the transmitter 52 may receive outgoing data 60 in the form of a digital signal to be transmitted via the one or more antennas 55. A digital-to-analog converter (DAC) 62 of the transmitter 52 may convert the digital signal to an analog signal, and a modulator 64 may combine the converted analog signal with a carrier signal to generate a radio wave. A power amplifier (PA) 66 receives the modulated signal from the modulator 64. The power amplifier 66 may amplify the modulated signal to a suitable level to drive transmission of the signal via the one or more antennas 55. A filter 68 (e.g., filter circuitry and/or software) of the transmitter 52 may then remove undesirable noise from the amplified signal to generate transmitted signal 70 to be transmitted via the one or more antennas 55. The filter 68 may include any suitable filter or filters to remove the undesirable noise from the amplified signal, such as a bandpass filter, a bandstop filter, a low pass filter, a high pass filter, and/or a decimation filter.

The power amplifier 66 and/or the filter 68 may be referred to as part of a radio frequency front end (RFFE), and more specifically, a transmit front end (TXFE) of the electronic device 10. Additionally, the transmitter 52 may include any suitable additional components not shown, or may not include certain of the illustrated components, such that the transmitter 52 may transmit the outgoing data 60 via the one or more antennas 55. For example, the transmitter 52 may include a mixer and/or a digital up converter. As another example, the transmitter 52 may not include the filter 68 if the power amplifier 66 outputs the amplified signal in or approximately in a desired frequency range (such that filtering of the amplified signal may be unnecessary).

FIG. 4 is a schematic diagram of the receiver 54 (e.g., receive circuitry), according to embodiments of the present disclosure. As illustrated, the receiver 54 may receive received signal 80 from the one or more antennas 55 in the form of an analog signal. A low noise amplifier (LNA) 82 may amplify the received analog signal to a suitable level for the receiver 54 to process. A filter 84 (e.g., filter circuitry and/or software) may remove undesired noise from the received signal, such as cross-channel interference. The filter 84 may also remove additional signals received by the one or more antennas 55 that are at frequencies other than the desired signal. The filter 84 may include any suitable filter or filters to remove the undesired noise or signals from the received signal, such as a bandpass filter, a bandstop filter, a low pass filter, a high pass filter, and/or a decimation filter. The low noise amplifier 82 and/or the filter 84 may be referred to as part of the RFFE, and more specifically, a receiver front end (RXFE) of the electronic device 10.

A demodulator 86 may remove a radio frequency carrier signal and/or extract a demodulated signal (e.g., an envelope signal) from the filtered signal for processing. An analog-to-digital converter (ADC) 88 may receive the demodulated analog signal and convert the signal to a digital signal of incoming data 90 to be further processed by the electronic device 10. Additionally, the receiver 54 may include any suitable additional components not shown, or may not include certain of the illustrated components, such that the receiver 54 may receive the received signal 80 via the one or more antennas 55. For example, the receiver 54 may include a mixer and/or a digital down converter.

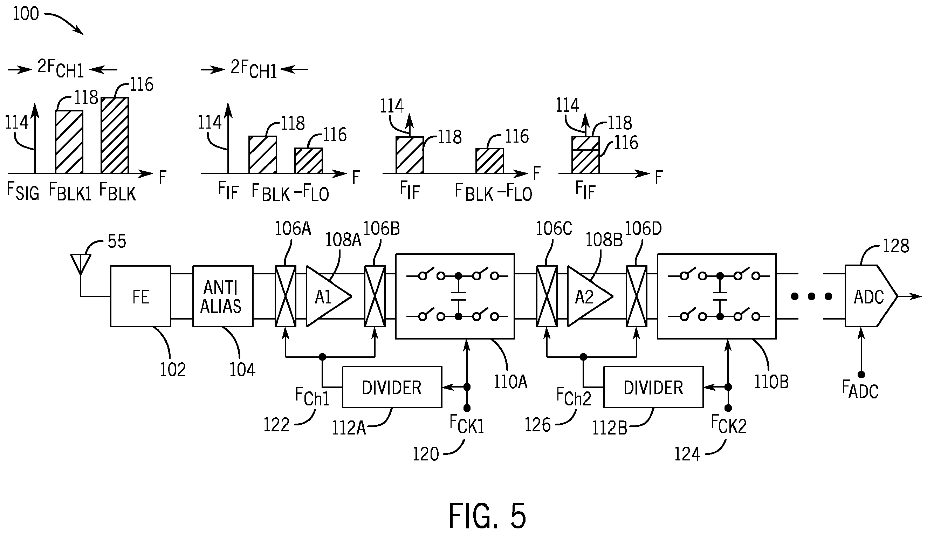

FIG. 5 is a schematic diagram of receiver circuitry 100 that reduces or eliminates the impact of alias components due to chopper circuits, according to embodiments of the present disclosure. The receiver circuitry 100 may include the receiver 54 of FIG. 4 above. The receiver circuitry 100 includes the one or more antennas 55, front end circuitry 102, anti-alias circuitry 104, chopper circuits 106A, 106B, 106C, and 106D (collectively, the chopper circuits 106), amplifiers 108A and 180B (collectively, the amplifiers 108), sampling circuits 110A and 110B (collectively, the sampling circuits 110), and dividers 112A and 112B (collectively, the dividers 112). A desired (e.g., target) signal 114 (e.g., $f_{sig}$) may be received via the antennas 55. Noise, such as a blocker signal 116 (e.g., $f_{blk}$), may also be received at the antennas 55 concurrently with the desired signal 114. The addition of the chopper circuits 106 may introduce additional noise, such as a blocker signal 118. The blocker signals 116 and 118 may be an offset or distance (e.g., $2f_{ch1}$) away from the desired signal. However, the sampling circuits 110 may down-convert or alias the blocker signals such that they overlap with the desired signal 114, causing or aggravating interference with the desired signal 114.

The anti-alias circuitry 104 may reduce the amplitude of the blocker signals 116 and 118 before the blocker signal 116 and the desired signal 114 reach the chopper circuits 106. The anti-alias circuitry 104 may include filter circuitry, such as a low-pass filter, a high-pass filter, or a bandpass filter. The amplifier 108A (e.g., a differential amplifier such as an operational amplifier) may be disposed between the chopper circuits 106A and 106B such that the input terminals of the amplifier 108A may be coupled to the output of the chopper circuit 106A and the output terminals of the amplifier 108A may be coupled to the input of the chopper circuit 106B. The output of the chopper circuit 106B may be coupled to an input of the sampling circuit 110A. The output of the sampling circuit 110A may be coupled to an input of the chopper circuit 106C. The output of the chopper circuit 106C may be coupled to input terminals of the amplifier 108B (e.g., a differential amplifier such as an operational amplifier), and output terminals of the amplifier 108B may be coupled to an input of the chopper circuit 106D. An output of the chopper circuit 106D may be coupled to an input of the sampling circuit 110B. The sampling circuits 110 may include a switching network, such as a switched-capacitor cell. The switched capacitor cell may include two branches of switches coupled via a parallel-coupled capacitor. While only two switching branches and one capacitor are shown, it should be noted that the sampling circuit # may include multiple any appropriate number of switched branches coupled via one or more capacitors. The output of the sampling circuit 110B may be coupled to an analog-to-digital converter (ADC) 128 or may be coupled to another sampling stage of the receiver circuitry 100. That is, the output of the sampling circuit 110B may be coupled to an input of another set of chopper circuits 106, another amplifier 108, and/or another sampling circuit 110.

While the anti-alias circuitry 104 may reduce the amplitude of the blocker signals 116 and 118, the blocker signals 116 and 118 may still cause interference on the desired signal 114 when down-converted (e.g., by the sampling circuit 110A), negatively impacting the performance of the receiver circuitry 100. The sampling circuit 110A may receive a sampling clock frequency 120 (e.g., $f_{ck1}$) and the chopper circuits 106 may receive a chopper frequency 122 (e.g., $f_{ch1}$). In some cases, a relationship between the chopper frequency 122 and the sampling clock frequency 120 may cause the blocker signals 116 and 118 to be down-converted into or near the desired signal 114, negatively impacting performance of the receiver circuitry 100. To reduce or eliminate an impact of the down-conversion, the clock frequency of the chopper circuits 106 may be adjusted such that the blocker signal 116 overlaps with the blocker signal 118, decreasing the overall interference on the desired signal 114.

The chopper frequency 122 may be derived from the sampling clock frequency 120 such that

$$f_{ch} = n * \left(\frac{f_{ck}}{2}\right)$$ , where $n$ represents a harmonic of the sampling clock frequency 120. To accomplish this relationship, the dividers 112 may be implemented between the sampling clock frequency 120 (e.g., between a sampling clock frequency generator) and the chopper circuits 106. By setting the chopper frequency 122 to ½ of the sampling clock frequency 122, the blocker signal 116 will merge into the blocker signal 118, reducing the overall noise experienced by the receiver circuitry 100. It should be noted that the chopper frequency 122 may be derived as a value other than ½ of the sampling clock frequency 120. For example, the chopper frequency 122 may be set to 3/2 of the sampling clock frequency 120 or another appropriate integer multiple or factor of ½.

The sampling circuit 110A may receive a sampling clock frequency 124 (e.g., $f_{ck2}$) and the chopper circuits 106 may receive a chopper frequency 126 (e.g., $f_{ch2}$). In some cases, the relationship between the chopper frequency 126 and the sampling clock frequency 124 may cause blocker signals to be down-converted into or near the desired signal 114, negatively impacting performance of the receiver circuitry 100. To reduce or eliminate the impact of the down-conversion of the blocker signals, the clock frequency of the chopper circuits 106C and 106D may be adjusted such that blocker signal due to the chopper circuits 106C and 106D overlaps with the blocker signal received via the antenna 55, decreasing the overall interference on the desired signal 114.

The chopper frequency 126 may be derived from the sampling clock frequency 124 as discussed above with respect to the chopper frequency 122 and the sampling clock frequency 120. To accomplish this, the divider 112B may be implemented between the sampling clock frequency 124 (e.g., between a sampling clock frequency generator) and the chopper circuits 106C and 106D. By setting the chopper frequency 126 to ½ of the sampling clock frequency 124, the blocker signals due to the chopper circuits 106 will merge into the blocker signal received at the antennas 55, reducing the overall noise experienced by the receiver circuitry 100. It should be noted that the chopper frequency 126 may be derived as a value other than ½ of the sampling clock frequency 124. For example, the chopper frequency 126 may be set to 3/2 of the sampling clock frequency or another appropriate integer multiple of ½.

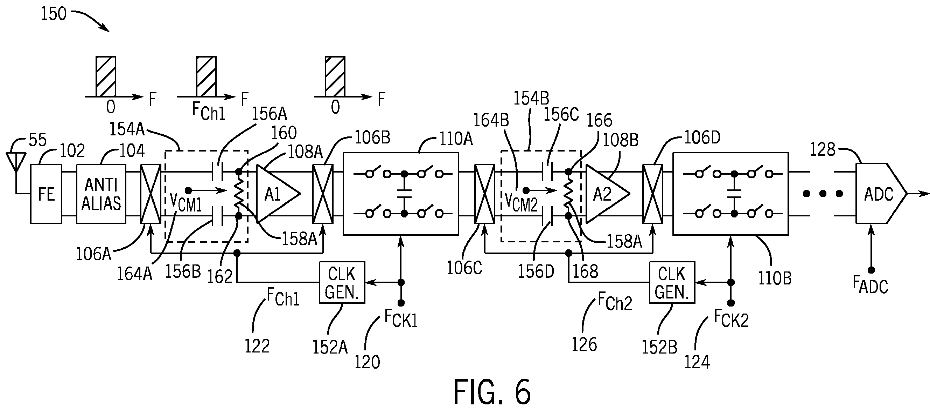

FIG. 6 is a schematic diagram illustrating a direct-conversion architecture of receiver circuitry 150 that improves performance of direct-conversion circuits and enables selection of desired or target common-mode levels at each stage of the direct-conversion circuit, according to embodiments of the present disclosure. As previously discussed, a direct-conversion baseband chain may be improved by disposing AC coupling circuits between chopper circuits in the transmitter or receiver chain to enable selection of a distinct common-mode level at each stage of the direct-conversion chain, while reducing or eliminating signal loss at DC frequencies. Chopper stabilization may improve performance of direct-conversion receiver circuitry (e.g., the receiver circuitry 150) by reducing or eliminating flicker noise and offset, but alignment of inter-stage common-mode levels may be desired for improved performance. Moreover, a distinct common-mode level may be desired for each stage of the receiver circuitry 150. In some scenarios, AC coupling circuits may be implemented such that an AC corner frequency is less than (e.g., significantly less than) a signal bandwidth divided by 2. For example, the AC corner frequency may be less than 100 kilohertz (100 kHz). However, in some cases AC coupling circuit implementation may lead to signal power loss at DC frequencies, which may provide challenges for direct-conversion architectures in particular. However, by embedding AC coupling circuitry into the chopper circuits 106 (e.g., by implementing AC coupling circuits between sets of chopper circuits 106), signal loss may be reduced or eliminated while enabling each stage of the receiver circuitry 150 to select distinct (e.g., stage-specific) common-mode levels.

The receiver circuitry 150 may include the antennas 55, the front-end circuitry 102, the anti-alias circuitry 104, the chopper circuits 106, the amplifiers 108, the sampling circuits 110, and/or the ADC 128 as discussed with respect to FIG. 5. The receiver circuitry 150 may also include clock generators 152A and 152B (collectively, the clock generators 152) coupled between the sampling clock frequencies (e.g., sampling clock frequency generators configured to generate the sampling clock frequencies $f_{ck1}$ and $f_{ck2}$) and/or the chopper circuits 106. The clock generators 152 may set the chopper frequencies 122 and 126 for the chopper circuits 106. In some embodiments, the clock generators 152 may include the dividers 112 as discussed with respect to FIG. 5. In this manner, the embodiment of FIG. 5 may be implemented separately from or may be combined with the architecture of FIGS. 6-8 to combine the alias component reducing functionality of FIG. 5 with the improved direct-conversion chain performance and common-mode level selection capabilities of FIGS. 6-8.

The receiver circuitry 150 also includes AC-coupling circuits 154A and 154B (collectively, the AC coupling circuits 154). The AC coupling circuit 154A may include capacitors 156A and 156B and/or a resistor 158A. The capacitor 156A may be series-coupled between a first output terminal of the chopper circuit 106A and a first input terminal of the amplifier 108A. The capacitor 156B may be series-coupled between a second output terminal of the chopper circuit 106A and a second input terminal of the amplifier 108A. The resistor 158A may be coupled in parallel between the input terminals of amplifier 108A, such that a first terminal of the resistor 158A may be coupled between the capacitor 156A and the first input terminal of the amplifier 108A at node 160 and a second terminal of the resistor 158A is coupled between the capacitor 156B and the second input terminal of the amplifier 108A at node 162. The AC-coupling circuit 154A may enable selection of a desired or target common-mode voltage 164A (e.g., $V_{CM1}$) based on the values chosen for the capacitors 156A/156B and the resistor 158A. Additionally, by embedding the AC-coupling circuit 154A between the chopper circuits 106A and 106B (as is illustrated in FIG. 6), the chopper circuit 106A may perform frequency translation on the desired signal 114 and the chopper circuit 106B may perform signal translation on the desired signal 114, and thus the AC-coupling circuit 154A may not reject any DC frequencies from the desired signal 114, but may reject DC frequencies from a portion of the chopper frequency 122. This may improve signal quality and signal power of the desired signal 114.

Likewise, the AC-coupling circuit 154B may include capacitors 156C and 156D and/or a resistor 158B. The capacitor 156C may be series-coupled between a first output terminal of the chopper circuit 106C and a first input terminal of the amplifier 108B. The capacitor 156D may be series-coupled between a second output terminal of the chopper circuit 106C and a second input terminal of the amplifier 108B. The resistor 158B may be coupled in parallel between the input terminals of amplifier 108B, such that a first terminal of the resistor 158B may be coupled between the capacitor 156C and the first input terminal of the amplifier 108B at node 166 and a second terminal of the resistor 158B may be coupled between the capacitor 156D and the second input terminal of the amplifier 108B at node 168. The AC-coupling circuit 154A may enable selection of a desired or target common-mode voltage 164B (e.g., $V_{CM2}$) based on the values chosen for the capacitors 156C/156D and the resistor 158B. Additionally, by embedding the AC-coupling circuit 154A between the chopper circuits 106A and 106B (as is illustrated in FIG. 6), the chopper circuit 106C may perform frequency translation on the desired signal 114 and the chopper circuit 106D may perform signal translation on the desired signal 114, and thus the AC-coupling circuit 154B may not reject any DC frequencies from the desired signal 114, but may reject DC frequencies from a portion of the chopper frequency 126. This may improve signal quality and signal power of the desired signal 114.

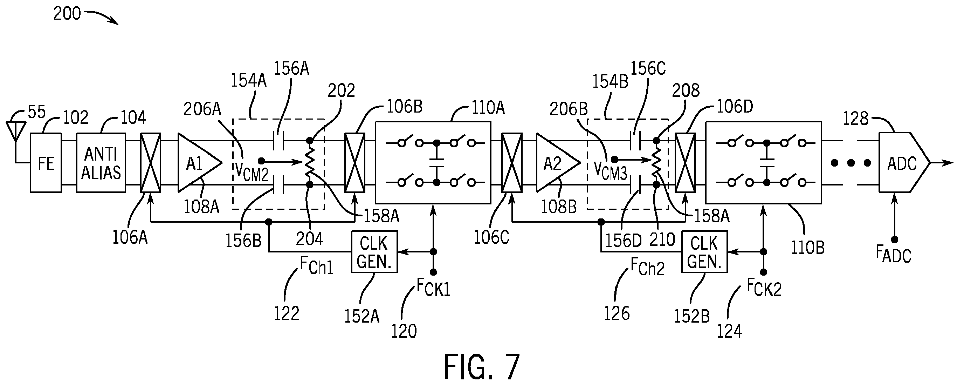

FIG. 7 is a schematic diagram illustrating another direct-conversion architecture of receiver circuitry 200 that improves performance of direct-conversion circuits and enables selection of a desired or target common-mode levels at each stage of the direct-conversion circuit by placing AC-coupling circuitry between chopper circuits and at an output of the amplifiers, according to embodiments of the present disclosure. The receiver circuitry 200 may be structurally and operationally similar to the receiver circuitry 150, except that the AC-coupling circuit 154A is implemented at the output of the amplifier 108A (rather than at the input of the amplifier 108A as illustrated in FIG. 6) and the AC-coupling circuit 154B is implemented at the output of the amplifier 108B (rather than at the input of the amplifier 108B as illustrated in FIG. 6). In the receiver circuitry 200, the capacitor 156A may be series-coupled between a first output of the amplifier 108A and a first input of the chopper circuit 106B. The capacitor 156B may be coupled between a second output of the amplifier 108A and a second input of the chopper circuit 106B. The resistor 158A may be coupled in parallel between the inputs of the chopper circuit 106B. A first terminal of the resistor 158A may be coupled between the capacitor 156A and the first input of the chopper circuit 106B at node 202 and a second terminal of the resistor 158A may be coupled between the capacitor 156B and the second input of the chopper circuit 106B at node 204. Similarly to the receiver circuitry 150, a desired or target common-mode voltage 206A ($V_{CM\ 2}$) may be selected based on a desired input of the subsequent stage (e.g., the switching circuitry 110B and/or the amplifier 108B). The capacitance values of the capacitors 156A and 156B and the resistance value of the resistor 158A may be chosen to ensure that an AC-corner of the first stage (e.g., the amplifier 108A and the switching circuitry 110A) is sufficiently low (e.g., significantly less than the chopper frequencies 122 and 126).

Turning to the AC-coupling circuit 154B, the capacitor 156C may be series-coupled between a first output of the amplifier 108B and a first input of the chopper circuit 106D. The capacitor 156B may be coupled between a second output of the amplifier 108B and a second input of the chopper circuit 106B. The resistor 158B may be coupled in parallel between the inputs of the chopper circuit 106D. A first terminal of the resistor 158B may be coupled between the capacitor 156C and the first input of the chopper circuit 106D at node 208 and a second terminal of the resistor 148B may be coupled between the capacitor 156D and the second input of the chopper circuit 106D at node 210. A desired or target common-mode voltage 206B ($V_{CM\ 3}$) may be selected based on a desired input of the subsequent stage (e.g., an additional amplifier and switching circuitry). The capacitance values of the capacitors 156A and 156B and the resistance value of the resistor 158A may be chosen to ensure than an AC-corner of the subsequent stage (e.g., the amplifier 108B and the switching circuitry 110B) is sufficiently low (e.g., significantly less than the chopper frequencies 122 and 126).

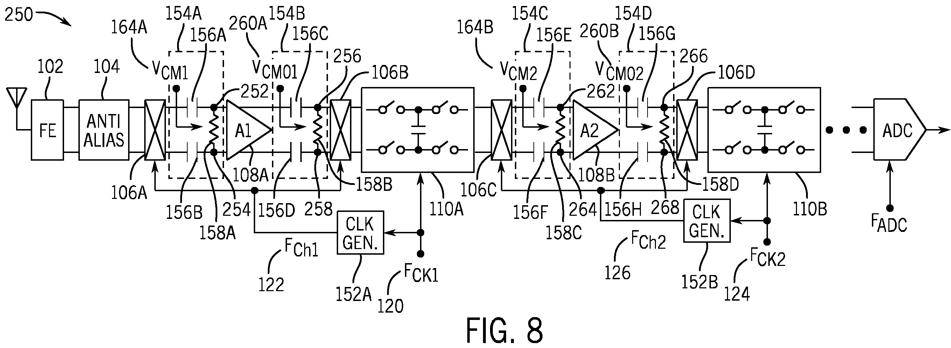

FIG. 8 is a schematic diagram illustrating another direct-conversion architecture of receiver circuitry 250 that improves performance of direct-conversion circuits and enables selection of common-mode levels at each stage of the direct-conversion circuit by placing AC-coupling circuitry between chopper circuits and at both an input and an output of the amplifiers, according to embodiments of the present disclosure. The receiver circuitry 250 may be structurally and operationally similar to the receiver circuitry 150 and 200, except that each amplifier 108 is coupled to AC-coupling circuits 154 at each input and output. As may be observed from the receiver circuitry 250, the AC-coupling circuit 154A may be coupled to an input of the amplifier 108A, the AC-coupling circuit 154B may be coupled to an output of the amplifier 108A, the AC-coupling circuit 154C may be coupled to an input of the amplifier 108B, and the AC-coupling circuit 154D may be coupled to an output of the amplifier 108B.

The AC coupling circuit 154A may include the capacitors 156A and 156B and the resistor 158A. The capacitor 156A may be series-coupled between the first output terminal of the chopper circuit 106A and the first input terminal of the amplifier 108A. The capacitor 156B may be series-coupled between a second output terminal of the chopper circuit 106A and a second input terminal of the amplifier 108A. The resistor 158A may be coupled in parallel between the input terminals of amplifier 108A, such that a first terminal of the resistor 158A may be coupled between the capacitor 156A and the first input terminal of the amplifier 108A at node 252, and a second terminal of the resistor 158A may be coupled between the capacitor 156B and the second input terminal of the amplifier 108A at node 254. The AC-coupling circuit 154A may enable selection of a desired or target common-mode input voltage 164A (e.g., $V_{CM1}$) based on a desired input of the subsequent stage (e.g., the switching circuitry 110B and/or the amplifier 108B). The capacitance values of the capacitors 156A and 156B and the resistance value of the resistor 158A may be chosen to ensure that an AC-corner of the first stage (e.g., the amplifier 108A and the switching circuitry 110A) is sufficiently low (e.g., significantly less than the chopper frequencies 122 and 126).

The AC coupling circuit 154B includes the capacitors 156C and 156D and the resistor 158B. The capacitor 156C may be series-coupled between a first output of the amplifier 108A and a first input of the chopper circuit 106B. The capacitor 156D may be coupled between a second output of the amplifier 108A and a second input of the chopper circuit 106B. The resistor 158B may be coupled in parallel between the inputs of the chopper circuit 106B. A first terminal of the resistor 158A may be coupled between the capacitor 156C and the first input of the chopper circuit 106B at node 256 and a second terminal of the resistor 158B may be coupled between the capacitor 156D and the second input of the chopper circuit 106B at node 258. A desired or target common-mode output voltage 260A ($V_{CMO\ 1}$) may be selected based on a desired input of the subsequent stage (e.g., the switching circuitry 110B and/or the amplifier 108B). The capacitance values of the capacitors 156C and 156D and the resistance value of the resistor 158B may be chosen to ensure that an AC-corner of the first stage (e.g., the amplifier 108A and the switching circuitry 110A) is sufficiently low (e.g., significantly less than the chopper frequencies 122 and 126).

Additionally, by embedding the AC-coupling circuits 154A and 154B between the chopper circuits 106A and 106B, the chopper circuit 106A may perform frequency translation on the desired signal 114 and the chopper circuit 106B may perform signal translation on the desired signal 114, and thus the AC-coupling circuits 154A and 154B may reject little or no DC frequencies from the desired signal 114, but may reject DC frequencies from a portion of the chopper frequency 122. This may improve signal quality and signal power of the desired signal 114, and improve overall performance of the receiver circuitry 250.

The AC-coupling circuit 154C may include capacitors 156E and 156F and a resistor 158C. The capacitor 156E may be series-coupled between a first output terminal of the chopper circuit 106C and a first input terminal of the amplifier 108B. The capacitor 156F may be series-coupled between a second output terminal of the chopper circuit 106C and a second input terminal of the amplifier 108B. The resistor 158C may be coupled in parallel between the input terminals of amplifier 108B, such that a first terminal of the resistor 158C may be coupled between the capacitor 156E and the first input terminal of the amplifier 108B at node 262 and a second terminal of the resistor 158C may be coupled between the capacitor 156F and the second input terminal of the amplifier 108B at node 264. The AC-coupling circuit 154C may enable selection of a desired or target common-mode input voltage 164B (e.g., $V_{CM\,2}$) based on a desired input of the subsequent stage (e.g., a subsequent switching circuitry and/or the amplifier). The capacitance values of the capacitors 156E and 156F and the resistance value of the resistor 158C may be chosen to ensure that an AC-corner of the second stage (e.g., the amplifier 108B and the switching circuitry 110B) is sufficiently low (e.g., significantly less than the chopper frequencies 122 and 126).

The AC-coupling circuit 154D may include capacitors 156G and 156H and a resistor 158D. The capacitor 156G may be series-coupled between a first output of the amplifier 108B and a first input of the chopper circuit 106D. The capacitor 156H may be series-coupled between a second output of the amplifier 108B and a second input of the chopper circuit 106D. The resistor 158D may be coupled in parallel between the inputs of the chopper circuit 106D. A first terminal of the resistor 158B may be coupled between the capacitor 156G and the first input of the chopper circuit 106D at node 266 and a second terminal of the resistor 158D may be coupled between the capacitor 156H and the second input of the chopper circuit 106D at node 268. A desired or target common-mode output voltage 260B ($V_{CMO\,2}$) may be selected based on a desired input of the subsequent stage (e.g., the switching circuitry 110B and/or the amplifier 108B). The capacitance values of the capacitors 156G and 156H and the resistance value of the resistor 158D may be chosen to ensure that an AC-corner of the second stage (e.g., the amplifier 108B and the switching circuitry 110B) is sufficiently low (e.g., significantly less than the chopper frequencies 122 and 126).

Additionally, by embedding the AC-coupling circuit 154D between the chopper circuits 106C and 106D, the chopper circuit 106C may perform frequency translation on the desired signal 114 and the chopper circuit 106D may perform signal translation on the desired signal 114, and thus the AC-coupling circuit 154D may reject little or no DC frequencies from the desired signal 114, but may reject DC frequencies from a portion of the chopper frequency 126. This may improve signal quality and signal power of the desired signal 114 and performance of the receiver circuitry 250.

It should be noted that the receiver circuitry 100, 150, 200, and/or 250 may include the receiver 54 discussed with respect to FIG. 4. Additionally, the same principles may apply to the transmitter 52 discussed with respect to FIG. 3.

In an embodiment, receiver circuitry may include a first chopper circuit; an alternating current (AC)-coupling circuit coupled to an output of the first chopper circuit and to an input of an amplifier, the AC-coupling circuit including a first capacitor coupled to a first input terminal of the amplifier, a second capacitor coupled to a second input terminal of the amplifier, and a resistor coupled in series between the first input terminal and the second input terminal of the amplifier; and a second chopper circuit coupled to an output of the amplifier.

The receiver circuitry includes a sampling circuit coupled to an output of the second chopper circuit, the sampling circuit configured to receive a sampling clock frequency from a first clock generator.

The receiver circuitry includes a second clock generator coupled at an input to the first clock generator and coupled at an output to the first chopper circuit and the second chopper circuit.

Wherein the second clock generator of the receiver circuitry is configured to provide a chopper frequency to the first chopper circuit and the second chopper circuit based on the sampling clock frequency.

Wherein the second clock generator of the receiver circuitry includes a divider circuit and is configured to adjust the chopper frequency such that the chopper frequency is equal to a multiple of one-half of the sampling clock frequency.

Wherein the AC-coupling circuit of the receiver circuitry is configured to reject direct current (DC) frequencies from the chopper frequency.

Wherein the first capacitor, the second capacitor, and the resistor are configured to provide an AC corner frequency associated with the amplifier.

The receiver circuitry includes a third chopper circuit coupled to an output of a sampling circuit and coupled to an additional AC-coupling circuit, the additional AC-coupling circuit coupled to an input of an additional amplifier.

Wherein the additional AC-coupling circuit of the receiver circuitry includes a third capacitor, a fourth capacitor, and a second resistor.

Wherein the third capacitor, the fourth capacitor, and the second resistor of the receiver circuitry are configured to provide an additional AC corner frequency associated with the additional amplifier, wherein the additional AC corner frequency is different than the AC corner frequency.

An electronic device, including: a plurality of antennas configured to receive a signal; a transmitter coupled to the plurality of antennas; and a receiver coupled to the plurality of antennas and configured to receive the signal from the plurality of antennas, the receiver including a first chopper circuit, an amplifier including differential input terminals coupled to output terminals of the first chopper circuit, an alternating current (AC)-coupling circuit coupled to differential output terminals of the amplifier, and a second chopper circuit including a first input terminal and a second input terminal coupled to output terminals of the AC-coupling circuit.

Wherein the AC-coupling circuit of the electronic device includes a first capacitor coupled between a first output terminal of the differential output terminals of the amplifier and the first input terminal of the first chopper circuit, a second capacitor coupled between a second output terminal of the differential output terminals of the amplifier the second input terminal of the second chopper circuit, and a resistor coupled in parallel between the first input terminal and the second input terminal of the second chopper circuit.

Wherein the first capacitor, the second capacitor, and the resistor of the electronic device are configured to provide an AC corner frequency associated with the amplifier.

Wherein the electronic device includes an additional AC-coupling circuit, the additional AC-coupling circuit including: a third capacitor; a fourth capacitor; and a second resistor coupled in parallel to the first capacitor and the second capacitor.

Wherein the third capacitor, the fourth capacitor, and the second resistor are configured to provide an additional AC corner frequency to a subsequent stage of the receiver, the additional AC corner frequency different than the AC corner frequency.

Wherein the subsequent stage of the receiver includes a third chopper circuit, a fourth chopper circuit, and a second amplifier, the additional AC-coupling circuit disposed between the second amplifier and the fourth chopper circuit.

A transceiver, including: a plurality of antennas; a transmitter coupled to the plurality of antennas; and a receiver coupled to the plurality of antennas and including a first set of chopper circuits including a first chopper circuit and a second chopper circuit, a first amplifier, a first alternating current (AC)-coupling circuit, and a second AC-coupling circuit embedded between the first chopper circuit and the second chopper circuit, a second set of chopper circuits including a third chopper circuit and a fourth chopper circuit, and a second amplifier, a third AC-coupling circuit, and a fourth AC-coupling circuit embedded between the third chopper circuit and the fourth chopper circuit.

The transceiver, wherein an output of the first chopper circuit is coupled to an input of the first AC-coupling circuit, an output of the first AC-coupling circuit is coupled to a differential input of the first amplifier, a differential output of the first amplifier is coupled to an input of the second AC-coupling circuit, and an output of the second AC-coupling circuit is coupled to the second chopper circuit.

The transceiver, wherein an output of the third chopper circuit is coupled to an input of the third AC-coupling circuit, an output of the third AC-coupling circuit is coupled to a differential input of the second amplifier, a differential output of the second amplifier is coupled to an input of the fourth AC-coupling circuit, and an output of the fourth AC-coupling circuit is coupled to the fourth chopper circuit.

The transceiver, wherein the first AC-coupling circuit is configured to provide a first common-mode input voltage level to the first amplifier, the second AC-coupling circuit is configured to provide a second common-mode output voltage level to the first amplifier, the third AC-coupling circuit is configured to provide a second common-mode input voltage level to the second amplifier, and the fourth AC-coupling circuit is configured to provide a second common-mode output voltage level to the second amplifier.

The specific embodiments described above have been shown by way of example, and it should be understood that these embodiments may be susceptible to various modifications and alternative forms.

The techniques presented and claimed herein are referenced and applied to material objects and concrete examples of a practical nature that demonstrably improve the present technical field and, as such, are not abstract, intangible or purely theoretical.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

**Claims**

1. An electronic device (10), comprising:

   a plurality of antennas (55, 55A-N) configured to receive a signal (80);
   a transmitter (52) coupled to the plurality of antennas (55, 55A-N); and
   a receiver (54) coupled to the plurality of antennas (55, 55A-N) and configured to receive the signal (80) from the plurality of antennas (55, 55A-N),
   the receiver (54) comprising
   an amplifier (108A) coupled between a differential output of a first chopper circuit (106A) and a differential input of a second chopper circuit (106B),
   an alternating current, AC-coupling circuit (154A, 154B, 154C, 154D) coupled between the differential output of the first chopper circuit (106A) and a differential input of the amplifier (108A),

a sampling circuit (110, 110A, 110B) coupled to a differential output of the second chopper circuit (106B) and coupled to a clock generator (152, 152A, 152B) configured to provide a sampling clock frequency (120) to the sampling circuit (110, 110A, 110B), and

a clock divider circuit (112A) configured to provide a chopper frequency (122, 126) to the first chopper circuit (106A) and the second chopper circuit (106B) based on the sampling clock frequency (120), the AC-coupling circuit (154A, 154B, 154C, 154D) configured to reject at least a portion of the direct current, DC, frequencies from the chopper frequency (122, 126), and the chopper frequency (122, 126) configured to merge a first interference due to the first chopper circuit (106A) and a second interference due to the second chopper circuit (106B).

2. The electronic device (10) of claim 1, wherein the clock divider circuit (112A) is configured to adjust the chopper frequency (122, 126) such that the chopper frequency (122, 126) comprises a frequency equal to one-half of the sampling clock frequency (120).

3. The electronic device (10) of claim 1, wherein the sampling circuit (110, 110A, 110B) comprises a switched-capacitor cell.

4. The electronic device (10) of claim 1, the receiver (54) comprises anti-alias circuitry (104) coupled to an antenna (55, 55A-N) of the plurality of antennas (55, 55A-N) and configured to reduce an amplitude of the first interference, the second interference, or both.

5. The electronic device (10) of claim 4, wherein the anti-alias circuitry (104) comprises a low-pass filter.

6. The electronic device (10) of claim 1, wherein the amplifier (108A) comprises an operational amplifier.

7. The electronic device (10) of claim 1, wherein:

the first chopper circuit (106A) comprises a first output coupled to a first input of the amplifier (108A);

the second chopper circuit (106B) comprises a second input coupled to a second output of the amplifier (108A) and comprising a third output;

the sampling circuit (110, 110A, 110B) comprises a third input coupled to the third output of the second chopper circuit (106B) and a fourth input coupled to the clock generator (152, 152A, 152B); and

the clock divider circuit (112A) coupled to the clock generator (152, 152A, 152B), the first chopper circuit (106A) and the second chopper circuit (106B).

8. The electronic device (10) of claim 1, comprising:

an additional amplifier (108B);
a third chopper circuit (106C) comprising a fourth output coupled to a fifth input of the additional amplifier (108B), the third chopper circuit (106C) coupled to a differential output of the first sampling circuit (110, 110A, 110B); and
a fourth chopper circuit (106D) comprising a sixth input coupled to a fifth output of the additional amplifier (108B).

9. The electronic device (10) of claim 8, comprising an additional sampling circuit (110B) coupled to an output of the fourth chopper circuit (106D), the additional sampling circuit (110B) coupled to an additional clock generator (152B) configured to output an additional sampling clock frequency (124).

10. The electronic device (10) of claim 9, comprising an additional clock divider circuit (112B) coupled to the additional clock generator (152B) and coupled to the third chopper circuit (106C) and the fourth chopper circuit (106D), the additional clock divider circuit (112B) configured to provide an additional chopper frequency (126) to the third chopper circuit (106C) and the fourth chopper circuit (106D).

11. The electronic device (10) of claim 10, wherein the additional clock divider circuit (112B) is configured to provide the additional chopper frequency based on the additional sampling clock frequency.

12. The electronic device (10) of claim 11, wherein the additional chopper frequency comprises a frequency equal to one-half of the additional sampling clock frequency.

13. The electronic device (10) of claim 11, wherein the additional chopper frequency comprises a frequency equal to three-halves of the additional sampling clock frequency.

14. The electronic device (10) of any of claims 1-13, wherein the AC-coupling circuit (154A, 154B, 154C, 154D) comprises a first capacitor (156A) coupled to a first input terminal of the differential input of the amplifier (108A), a second capacitor (156B) coupled to a second input terminal of the differential input of the amplifier (108A), and a resistor (158A) coupled in series between the first input terminal and the second input terminal of the amplifier (108A).

**Patentansprüche**

1. Elektronische Vorrichtung (10), aufweisend:

   eine Vielzahl von Antennen (55, 55A-N), die konfiguriert sind, um ein Signal (80) zu empfangen;
   einen Sender (52), der mit der Vielzahl von Antennen (55, 55A-N) gekoppelt ist; und
   einen Empfänger (54), der mit der Vielzahl von Antennen (55, 55A-N) gekoppelt ist und konfiguriert ist, um das Signal (80) von der Vielzahl von Antennen (55, 55A-N) zu empfangen, wobei der Empfänger (54) aufweist
   einen Verstärker (108A), der zwischen einen differentiellen Ausgang einer ersten Chopper-Schaltung (106A) und einen differentiellen Eingang einer zweiten Chopper-Schaltung (106B) gekoppelt ist,
   eine Wechselstrom-, AC-, Kopplungsschaltung (154A, 154B, 154C, 154D), die zwischen den differentiellen Ausgang der ersten Chopper-Schaltung (106A) und einen differentiellen Eingang des Verstärkers (108A) gekoppelt ist,
   eine Abtastschaltung (110, 110A, 110B), die mit einem differentiellen Ausgang der zweiten Chopper-Schaltung (106B) gekoppelt ist und mit einem Taktgenerator (152, 152A, 152B) gekoppelt ist, der konfiguriert ist, um der Abtastschaltung (110, 110A, 110B) eine Abtasttaktfrequenz (120) bereitzustellen, und
   eine Taktteilerschaltung (112A), die konfiguriert ist, um der ersten Chopper-Schaltung (106A) und der zweiten Chopper-Schaltung (106B) basierend auf der Abtasttaktfrequenz (120) eine Chopperfrequenz (122, 126) bereitzustellen, wobei die Wechselstromkopplungsschaltung (154A, 154B, 154C, 154D) konfiguriert ist, um mindestens einen Teil der Gleichstromfrequenzen von der Chopperfrequenz (122, 126) zurückzuweisen, und die Chopperfrequenz (122, 126) konfiguriert ist, um eine erste Interferenz aufgrund der ersten Chopper-Schaltung (106A) und eine zweite Interferenz aufgrund der zweiten Chopper-Schaltung (106B) zusammenzuführen.

2. Elektronische Vorrichtung (10) nach Anspruch 1, wobei die Taktteilerschaltung (112A) konfiguriert ist, um die Chopperfrequenz (122, 126) derart einzustellen, dass die Chopperfrequenz (122, 126) eine Frequenz aufweist, die gleich der Hälfte der Abtasttaktfrequenz (120) ist.

3. Elektronische Vorrichtung (10) nach Anspruch 1, wobei die Abtastschaltung (110, 110A, 11oB) eine Schaltkondensatorzelle aufweist.

4. Elektronische Vorrichtung (10) nach Anspruch 1, wobei der Empfänger (54) eine Anti-Alias-Schaltung (104) aufweist, die mit einer Antenne (55, 55A-N) der Vielzahl von Antennen (55, 55A-N) gekoppelt ist und konfiguriert ist, um eine Amplitude der ersten Interferenz, der zweiten Interferenz oder beider zu reduzieren.

5. Elektronische Vorrichtung (10) nach Anspruch 4, wobei die Anti-Alias-Schaltung (104) ein Tiefpassfilter aufweist.

6. Elektronische Vorrichtung (10) nach Anspruch 1, wobei der Verstärker (108A) einen Operationsverstärker aufweist.

7. Elektronische Vorrichtung (10) nach Anspruch 1, wobei:

   die erste Chopper-Schaltung (106A) einen ersten Ausgang aufweist, der mit einem ersten Eingang des Verstärkers (108A) gekoppelt ist;
   die zweite Chopper-Schaltung (106B) einen zweiten Eingang aufweist, der mit einem zweiten Ausgang des Verstärkers (108A) gekoppelt ist und einen dritten Ausgang aufweist;
   die Abtastschaltung (110, 110A, 110B) einen dritten Eingang, der mit dem dritten Ausgang der zweiten Chopper-Schaltung (106B) gekoppelt ist, und einen vierten Eingang aufweist, der mit dem Taktgenerator (152, 152A, 152B) gekoppelt ist; und
   die Taktteilerschaltung (112A) mit dem Taktgenerator (152, 152A, 152B), der ersten Chopper-Schaltung (106A) und der zweiten Chopper-Schaltung (106B) gekoppelt ist.

8. Elektronische Vorrichtung (10) nach Anspruch 1, aufweisend:

   einen zusätzlichen Verstärker (108B);
   eine dritte Chopper-Schaltung (106C), die einen vierten Ausgang aufweist, der mit einem fünften Eingang des zusätzlichen Verstärkers (108B) gekoppelt ist, wobei die dritte Chopper-Schaltung (106C) mit einem Differenzausgang der ersten Abtastschaltung (110, 110A, 110B) gekoppelt ist; und
   eine vierte Chopper-Schaltung (106D), die einen sechsten Eingang aufweist, der mit einem fünften Ausgang des zusätzlichen Verstärkers (108B) gekoppelt ist.

9. Elektronische Vorrichtung (10) nach Anspruch 8, aufweisend eine zusätzliche Abtastschaltung (11oB), die mit einem Ausgang der vierten Chopper-Schaltung (106D) gekoppelt ist, wobei die zusätzliche Abtastschaltung (110B) mit einem zusätzlichen Taktgenerator (152B) gekoppelt ist, der konfiguriert ist, um eine zusätzliche Abtasttaktfrequenz (124) auszugeben.

**10.** Elektronische Vorrichtung (10) nach Anspruch 9, aufweisend eine zusätzliche Taktteilerschaltung (112B), die mit dem zusätzlichen Taktgenerator (152B) gekoppelt ist und mit der dritten Chopper-Schaltung (106C) und der vierten Chopper-Schaltung (106D) gekoppelt ist, wobei die zusätzliche Taktteilerschaltung (112B) konfiguriert ist, um eine zusätzliche Chopperfrequenz (126) für die dritte Chopper-Schaltung (106C) und die vierte Chopper-Schaltung (106D) bereitzustellen.

**11.** Elektronische Vorrichtung (10) nach Anspruch 10, wobei die zusätzliche Taktteilerschaltung (112B) konfiguriert ist, um die zusätzliche Chopperfrequenz basierend auf der zusätzlichen Abtasttaktfrequenz bereitzustellen.

**12.** Elektronische Vorrichtung (10) nach Anspruch 11, wobei die zusätzliche Chopperfrequenz eine Frequenz aufweist, die gleich der Hälfte der zusätzlichen Abtasttaktfrequenz ist.

**13.** Elektronische Vorrichtung (10) nach Anspruch 11, wobei die zusätzliche Chopperfrequenz eine Frequenz aufweist, die gleich drei Hälften der zusätzlichen Abtasttaktfrequenz ist.

**14.** Elektronische Vorrichtung (10) nach einem der Ansprüche 1 bis 13, wobei die Wechselstromkopplungsschaltung (154A, 154B, 154C, 154D) einen ersten Kondensator (156A), der mit einem ersten Eingangsanschluss des Differenzeingangs des Verstärkers (108A) gekoppelt ist, einen zweiten Kondensator (156B), der mit einem zweiten Eingangsanschluss des Differenzeingangs des Verstärkers (108A) gekoppelt ist, und einen Widerstand (158A) aufweist, der zwischen dem ersten Eingangsanschluss und dem zweiten Eingangsanschluss des Verstärkers (108A) in Reihe geschaltet ist.

**Revendications**

**1.** Un dispositif électronique (10), comprenant :

une pluralité d'antennes (55, 55A-N) configurées pour recevoir un signal (80) ;
un émetteur (52) couplé à la pluralité d'antennes (55, 55A-N) ; et
un récepteur (54) couplé à la pluralité d'antennes (55, 55A-N) et configuré pour recevoir le signal (80) en provenance de la pluralité d'antennes (55, 55A-N),
le récepteur (54) comprenant

un amplificateur (108A) couplé entre une sortie différentielle d'un premier circuit hacheur (106A) et une entrée différentielle d'un second circuit hacheur (106B), un circuit de couplage en alternatif, AC, (154A, 154B, 154C, 154D) couplé entre la sortie différentielle du premier circuit hacheur (106A) et une entrée différentielle de l'amplificateur (108A),
un circuit d'échantillonnage (110, 110A, 110B) couplé à une sortie différentielle du second circuit hacheur (106B) et couplé à un générateur d'horloge (152, 152A, 152B) configuré pour délivrer une fréquence d'horloge d'échantillonnage (120) au circuit échantillonneur (110, 110A, 110B), et
un circuit diviseur d'horloge (112A) configuré pour délivrer une fréquence de hacheur (120, 226) au premier circuit hacheur (106A) et au second circuit hacheur (106B) sur la base de la fréquence d'horloge d'échantillonnage (120), le circuit de couplage AC (154A, 154B, 154C, 154D) étant configuré pour rejeter au moins une partie des fréquences du continu, DC, de la fréquence de hacheur (122, 126), et la fréquence de hacheur (122, 126) étant configurée pour fusionner une première interférence venant du premier circuit hacheur (106A) et une seconde interférence venant du second circuit hacheur (106B) .

**2.** Le dispositif électronique (10) de la revendication 1, dans lequel le circuit diviseur d'horloge (112A) est configuré pour ajuster la fréquence de hacheur (122, 126) de telle manière que la fréquence de hacheur (122, 126) présente une fréquence égale à la moitié de la fréquence d'horloge d'échantillonnage (120).

**3.** Le dispositif électronique (10) de la revendication 1, dans lequel le circuit d'échantillonnage (110, 110A, 110B) comprend une cellule à condensateur commuté.

**4.** Le dispositif électronique (10) de la revendication 1, dans lequel le récepteur (54) comprend une circuiterie anti-aliasing (104) couplée à une antenne (55, 55A-N) de la pluralité d'antennes (55, 55A-N) et configurée pour réduire une amplitude de la première interférence, de la seconde interférence, ou des deux.

**5.** Le dispositif électronique (10) de la revendication 4, dans lequel la circuiterie anti-aliasing (104) comprend un filtre passe-bas.

**6.** Le dispositif électronique (10) de la revendication 1, dans lequel l'amplificateur (108A) comprend un amplificateur opérationnel.

7. Le dispositif électronique (10) de la revendication 1, dans lequel :

le premier circuit hacheur (106A) comprend une première sortie couplée à une première entrée de l'amplificateur (108A) ;
le second circuit hacheur (106B) comprend une seconde entrée couplée à une seconde sortie de l'amplificateur (108A) et comprend une troisième sortie ;
le circuit d'échantillonnage (110, 110A, 110B) comprend une troisième entrée couplée à la troisième sortie du second circuit hacheur (106B) et une quatrième entrée couplée au générateur d'horloge (152, 152A, 152B) ; et
le circuit diviseur d'horloge (112A) est couplé au générateur d'horloge (152, 152A, 152B), au premier circuit hacheur (106A), et au second circuit hacheur (106B).

8. Le dispositif électronique (10) de la revendication 1, comprenant :

un amplificateur supplémentaire (108B) ;
un troisième circuit hacheur (106C) comprenant une quatrième sortie couplée à une cinquième entrée de l'amplificateur supplémentaire (108B), le troisième circuit hacheur (106C) étant couplé à une sortie différentielle du premier circuit d'échantillonnage (110, 110A, 110B) ; et
un quatrième circuit hacheur (106D) comprenant une sixième entrée couplée à une cinquième sortie de l'amplificateur supplémentaire (108B).

9. Le dispositif électronique (10) de la revendication 8, comprenant en outre un circuit d'échantillonnage supplémentaire (110B) couplé à une sortie du quatrième circuit hacheur (106D), le circuit d'échantillonnage supplémentaire (110B) étant couplé à un générateur d'horloge supplémentaire (152B) configuré pour délivrer en sortie une fréquence d'horloge d'échantillonnage supplémentaire (124).

10. Le dispositif électronique (10) de la revendication 9, comprenant un circuit diviseur d'horloge supplémentaire (112B) couplé au générateur d'horloge supplémentaire (152B) et couplé au troisième circuit hacheur (106C) et au quatrième circuit hacheur (106D), le circuit diviseur d'horloge supplémentaire (112B) étant configuré pour délivrer une fréquence de hacheur supplémentaire (126) au troisième circuit hacheur (106C) et au quatrième circuit hacheur (106D).

11. Le dispositif électronique (10) de la revendication 10, dans lequel le circuit diviseur d'horloge supplémentaire (112B) est configuré pour délivrer la fréquence de hacheur supplémentaire sur la base de la fréquence d'horloge d'échantillonnage supplémentaire.

12. Le dispositif électronique (10) de la revendication 11, dans lequel la fréquence de hacheur supplémentaire présente une fréquence égale à la moitié de la fréquence d'horloge d'échantillonnage supplémentaire.

13. Le dispositif électronique (10) de la revendication 11, dans lequel la fréquence de hacheur supplémentaire présente une fréquence égale à trois fois la moitié de la fréquence d'horloge d'échantillonnage supplémentaire.

14. Le dispositif électronique (10) de l'une des revendications 1 à 13, dans lequel le circuit de couplage AC (154A, 154B, 154C, 154D) comprend un premier condensateur (156A) couplé à une première borne d'entrée de l'entrée différentielle de l'amplificateur (108A), un second condensateur (156B) couplé à une seconde borne d'entrée de l'entrée différentielle de l'amplificateur (108A), et une résistance (158A) couplée en série entre la première borne d'entrée et la seconde borne d'entrée de l'amplificateur (108A).

FIG. 1

FIG. 2

FIG. 3

FIG. 4

EP 4 531 290 B1

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3193446 A1
- US 6191648 B1

- CN 113552400 A